(19) Europäisches Patentamt
European Patent Office
Office européen des brevets

(11) **EP 3 210 733 A1**

(12) **EUROPEAN PATENT APPLICATION**

(43) Date of publication:
**30.08.2017 Bulletin 2017/35**

(51) Int Cl.:
***B29B 17/00*** *(2006.01)*

(21) Application number: **16157866.1**

(22) Date of filing: **29.02.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Tusti B.V.**
**5612 AR Eindhoven (NL)**

(72) Inventor: **KOLIJN, Jan**
**5627 KK Eindhoven (NL)**

(74) Representative: **van Wijk, Alexander Pieter et al**
**Mainstay IP**
**De Tuinen 16**
**8471 XP Wolvega (NL)**

(54) **PROCESS FOR CLEANING RECYCLABLE PLASTIC MATERIAL**

(57) The invention relates to a process for cleaning recyclable plastic material comprising the following steps:
(a) providing a contaminated recyclable non-styrene based plastic material;
(b) contacting the contaminated recyclable plastic material at a temperature in the range of from 5-35 °C with an emulsion which comprises a water phase and a solvent phase to remove contaminants from the contaminated recyclable plastic material, wherein the water phase is present in an amount of more than 50 wt. %, based on total weigh of the emulsion, and the solvent phase comprises a fatty acid ester;
(c) separating the recyclable plastic material as obtained in step (b) from the emulsion as obtained in step (b) which contains contaminants removed from the contaminated recyclable plastic material; and
(d) recovering after step (c) the recyclable plastic material which is separated from the emulsion. The invention further relates to use of an emulsion which comprises a water phase and a solvent phase to remove contaminants from a contaminated recyclable plastic material, wherein the water phase is present in an amount of more than 50 wt. %, based on total weigh of the emulsion, and the solvent phase comprises a fatty acid ester.

EP 3 210 733 A1

**Description**

**FIELD OF THE INVENTION**

The present invention relates to a process for cleaning recyclable plastic material, and the use of an emulsion to remove contaminants from a contaminated recyclable plastic material.

**BACKGROUND OF THE INVENTION**

The recycling of plastic containers is becoming increasingly important from both environmental and economical perspective. The plastic containers to be recycled usually contain contaminants in the form of residues of the material they once contained. Such materials include for instance detergents, motor oils, milk, frying oils and cooking oils. In order to remove residues of these materials from the plastic containers, the plastic containers are usually grinded and the plastic particles so obtained are subjected to a cleaning process. Cleaning processes commonly used for this purpose are energy intensive processes because of the high temperatures that need to be applied and/or are environmentally unfriendly since use is made of combustible or flammable solvents and/or corrosive cleaning agents.

Object of the present invention is to provide a cleaning process for recyclable plastic materials which is less energy intensive and which at the same time is environmentally friendly.

**SUMMARY OF THE INVENTION**

It has now been found that this can be established when use is made of a particular emulsion in the cleaning process.

Accordingly, the present invention relates to a process for cleaning recyclable plastic material comprising the following steps:

(a) providing a contaminated recyclable non-styrene based plastic material;
(b) contacting the contaminated recyclable plastic material at a temperature in the range of from 5-35 °C with an emulsion which comprises a water phase and a solvent phase to remove contaminants from the contaminated recyclable plastic material, wherein the water phase is present in an amount of more than 50 wt. %, based on total weigh of the emulsion, and the solvent phase comprises fatty acid ester;
(c) separating the recyclable plastic material as obtained in step (b) from the emulsion as obtained in step (b) which contains contaminants removed from the contaminated recyclable plastic material; and
(d) recovering after step (c) the recyclable plastic material which is separated from the emulsion.

A major advantage of the present invention resides in the fact that the present process can be carried out at a low temperature, whereas at the same time the use of a combustible or flammable solvent is not needed, allowing for an environmentally safe cleaning process.

**DETAILED DESCRIPTION OF THE INVENTION**

In step (a), a contaminated recyclable plastic material is provided. A wide variety of recyclable non-styrene based plastic material can be cleaned in accordance with the present invention. The recyclable non-styrene based plastic material can suitably be selected from the group consisting of a recyclable high density polyethylene material, low density polyethylene material, polyethylene terephthalate material, polypropylene material, polyvinylchloride material, polyamide material, polybutylene terephthalate material, polycarbonate material, polymethylmethacrylate material, and polyoxymethylene material. Copolymers of any of these recyclable non-styrene based polymer materials can also suitably be used in accordance with the present invention. In addition, the recyclable plastic material to be used in the present invention can also suitably be a laminated polymer composite in which two or more these polymer materials have been laminated onto each other.

Preferably, the recycle non-styrene based plastic material is a recyclable high density polyethylene material or polyethylene terephthalate material.

The recycle plastic material will usually be provided in the form of plastic particles that are obtained by shredding or dividing contaminated plastic containers into plastic container parts. The plastic containers may be containers for motor oils, food products such as milk, detergents, and in particular frying oils and cooking oils.

In step (b), the contaminated recyclable plastic material is contacted at a temperature in the range of from 5-35 °C with an emulsion which comprises a water phase and a solvent phase to remove contaminants from the contaminated recyclable plastic material.

The temperature in step (b) is preferably in the range of from 15-30 °C, more preferably in the range of from 15-25 °C.

The water phase is present in an amount of more than 50 wt. %, based on total weight of the emulsion.

The solvent phase in step (b) is preferably present in an amount in the range of from 1-20 wt. %, based on total weight of the emulsion. More preferably, the solvent in step (b) is present in an amount in the range of from 2-10 wt. %, based on total weight of the emulsion.

The solvent phase in step (b) comprises a fatty acid ester. Suitably, the fatty acid ester is fatty acid ester having the general formula (I) of $R^1$ -(C=O)--$R^2$, wherein $R^1$ is an alkyl group comprising between 8-24 carbon atoms, and $R^2$ is an alkyl alcohol group comprising between 1-4 carbon atoms.

Preferably, $R^1$ is an alkyl group which comprises between 12-20 carbon atoms. $R^1$ may be a straight or branched alkyl group. Further, $R^1$ may be a saturated or (mono- or multiple) unsaturated alkyl group.

Preferably, $R^2$ is an alkyl alcohol group comprising 1-4 carbon atoms, more preferably 1 or 2 carbon atoms.

The fatty acid esters to be used in accordance with the present invention are suitably prepared by reacting a fatty acid with an alcohol. Suitably, the fatty acid ester is derived from a saturated fatty acid or unsaturated fatty acid. Suitable examples of saturated fatty acids from which the fatty acid ester may be derived include those selected from the group consisting of nonanoic acid, isononanoic acid, decanoic acid, isodecanoic acid, undecanoic acid, iso-undecanoic acid, dodecanoic acid, iso-dodecanoic acid, tridecanoic acid, iso-tridecanoic acid, tetradecanoic acid, iso-tetradecanoic acid, pentadecanoic acid, iso-pentadecanoic acid, hexadecanoic acid, iso-hexadecanoic acid, heptadecanoic acid, iso-heptadecanoic acid, octadecanoic acid, iso-octadecanoic acid, nonadecanoic acid, iso-nonadecanoic acid, eicosanoic acid, iso-eicosanoic acid, heneicosanoic acid, iso-heneicosanoic acid, docosanoic acid, iso-docosanoic acid, tricosanoic acid, iso-tricosanoic acid, tetracosanoic acid, iso-tetracosanoic acid, pentacosanoic acid and isopentacosanoic acid. Suitable examples of unsaturated fatty acids from which the fatty acid ester may be derived include those elected from the group consisting of mono-unsaturated fatty acids such as crotonic acid, myristoleic acid, palmitoleic acid, sapienic acid, oleic acid, elaidic acid, vaccenic acid, gadoleic, eicosenoic acid, erucic acid, nervonic acid; di-unsaturated fatty acids such as linoleic acid, eicosadienoic acid, and docosadienoic acid;tri-unsaturated fatty acids such as linolenic acid, pinolenic acid, eleostearic acid, mead acid, dihomo-γ-linolenic acid, and eicosatrienoic acid; tetra-unsaturated fatty acids such as stearidonic acid, arachidonic acid, eicosatetraenoic acid, and adrenic acid,;pentaunsaturated fatty acids such as bosseopentaenoic acid, eicosapentaenoic acid, ozubondo acid, sardine acid, and tetracosanolpentaenoic acid; and hexa-unsaturated fatty acids such as docosahexaenoic acid and herring acid

Preferably, the fatty acid ester is derived from a saturated fatty acid selected from the group consisting of tridecanoic acid, iso-tridecanoic acid, tetradecanoic acid, iso-tetradecanoic acid, pentadecanoic acid, iso-pentadecanoic acid, hexadecanoic acid, iso-hexadecanoic acid, heptadecanoic acid, ios-heptadecanoic acid, octadecanoic acid, iso-octadecanoic acid, nonadecanoic acid, iso-nonadecanoic acid, eicosanoic acid, iso-eicosanoic acid, heneicosanoic acid, iso-heneicosanoic acid. Preferably, the fatty acid ester is derived from an unsaturated fatty acid selected from the group consisting of mono-unsaturated fatty acids such as myristoleic, palmitoleic acid, sapienic acid, oleic acid, elaidic acid, vaccenic acid, gadoleic, eicosenoic acid; di-unsaturated fatty acids such as linoleic acid, eicosadienoic acid; tri-unsaturated fatty acids such as linolenic acid, pinolenic acid, eleostearic acid, mead acid, dihomo-γ-linolenic acid, eicosatrienoic acid; tetra-unsaturated fatty acids such as stearidonic acid, arachidonic acid, eicosatetraenoic acid; and pentaunsaturated fatty acids such as bosseopentaenoic acid and eicosapentaenoic acid.

More preferably, the fatty acid ester is derived from a saturated fatty acid selected from the group consisting of as hexadecanoic acid, iso-hexadecanoic acid, heptadecanoic acid, iso-heptadecanoic acid, octadecanoic acid, and iso-octadecanoic acid. More preferably, the fatty acid ester is derived from an unsaturated fatty acid selected from the group consisting of mono-unsaturated fatty acids such as palmitoleic acid, sapienic acid, oleic acid, elaidic acid, vaccenic acid,;di-unsaturated fatty acids such as linoleic acid; tri-unsaturated fatty acids such as linolenic acid, pinolenic acid, eleostearic acid; tetra-unsaturated fatty acids such as stearidonic acid, arachidonic acid; and pentaunsaturated fatty acids such as bosseopentaenoic acid.

Most preferably, the fatty acid ester is derived from linoleic acid.

The fatty acid is preferably reacted with methanol or ethanol, more preferably with methanol.

Preferred fatty acid esters to be used in accordance with the present invention can suitably be a saturated fatty esters or unsaturated fatty acid esters. Suitable examples of saturated fatty acid esters are those selected from the group consisting of nonanoic acid methyl ester, isononanoic acid methyl ester, decanoic acid methyl ester, isodecanoic acid methyl ester, undecanoic acid methyl ester, iso-undecanoic acid methyl ester, dodecanoic acid methyl ester, iso-dodecanoic acid methyl ester, tridecanoic acid methyl ester, iso-tridecanoic acid methyl ester, tetradecanoic acid methyl ester, iso-tetradecanoic acid methyl ester, pentadecanoic acid methyl ester, iso-pentadecanoic acid methyl ester, hexadecanoic acid methyl ester, iso-hexadecanoic acid methyl ester, heptadecanoic acid methyl ester, iso-heptadecanoic acid methyl ester, octadecanoic acid methyl ester, iso-octadecanoic acid methyl ester, nonadecanoic acid methyl ester, iso-nonadecanoic acid methyl ester, eicosanoic acid methyl ester, iso-eicosanoic acid methyl ester, heneicosanoic acid methyl ester, iso-heneicosanoic acid methyl ester, docosanoic acid methyl ester, iso-docosanoic acid methyl ester, tricosanoic acid methyl ester, iso-tricosanoic acid methyl ester, tetracosanoic acid methyl ester, iso-tetracosanoic acid methyl ester, pentacosanoic acid methyl ester and isopentacosanoic acid methyl ester. Suitable examples of unsaturated fatty acid esters include those selected from the group consisting of crotonic acid methyl ester, myristoleic acid methyl ester, palmitoleic acid methyl ester, sapienic acid methyl ester, oleic acid methyl ester, elaidic acid methyl ester, vaccenic acid methyl ester, gadoleic, eicosenoic acid methyl ester, erucic acid methyl ester, nervonic acid methyl ester; di-unsaturated fatty acid methyl esters such as linoleic acid methyl ester, eicosadienoic acid methyl ester,and docosadienoic acid methyl ester; tri-unsaturated fatty acid methyl esters such as linolenic acid methyl ester, pinolenic acid methyl ester, eleostearic acid methyl ester, mead acid methyl ester, dihomo-$\gamma$-linolenic acid methyl ester, and eicosatrienoic acid methyl ester; tetra-unsaturated fatty acid methyl esters such as stearidonic acid methyl ester, arachidonic acid methyl ester, eicosatetraenoic acid methyl ester, and adrenic acid methyl ester; pentaunsaturated fatty acid methyl esters such as bosseopentaenoic acid methyl ester, eicosapentaenoic acid methyl ester, ozubondo acid methyl ester, sardine acid methyl ester, tetracosanolpentaenoic acid methyl ester; and hexa-unsaturated fatty acid methyl esters, such as docosahexaenoic acid methyl ester and herring acid methyl ester.

Preferably, the fatty acid ester is selected from the group consisting of tridecanoic acid methyl ester, iso-tridecanoic acid methyl ester, tetradecanoic acid methyl ester, iso-tetradecanoic acid methyl ester, pentadecanoic acid methyl ester, iso-pentadecanoic acid methyl ester, hexadecanoic acid methyl ester, iso-hexadecanoic acid methyl ester, heptadecanoic acid methyl ester, ios-heptadecanoic acid methyl ester, octadecanoic acid methyl ester, iso-octadecanoic acid methyl ester, nonadecanoic acid methyl ester, iso-nonadecanoic acid methyl ester, eicosanoic acid methyl ester, iso-eicosanoic acid methyl ester, heneicosanoic acid methyl ester, and iso-heneicosanoic acid methyl ester. Preferably, the unsaturated fatty acid ester is selected from gthe group consisting of myristoleic, palmitoleic acid methyl ester, sapienic acid methyl ester, oleic acid methyl ester, elaidic acid methyl ester, vaccenic acid methyl ester, gadoleic,and eicosenoic acid methyl ester; di-unsaturated fatty acid methyl esters such as linoleic acid methyl ester, and eicosadienoic acid methyl ester; tri-unsaturated fatty acid methyl esters such as linolenic acid methyl ester, pinolenic acid methyl ester, eleostearic acid methyl ester, mead acid methyl ester, dihomo-$\gamma$-linolenic acid methyl ester, and eicosatrienoic acid methyl ester; tetra-unsaturated fatty acid methyl esters such as stearidonic acid methyl ester, arachidonic acid methyl ester, and eicosatetraenoic acid methyl ester; and pentaunsaturated fatty acid methyl esters such as bosseopentaenoic acid methyl ester and eicosapentaenoic acid methyl ester.

More preferably, the saturated fatty acid is selected from the group consisting of hexadecanoic acid methyl ester, iso-hexadecanoic acid methyl ester, heptadecanoic acid methyl ester, iso-heptadecanoic acid methyl ester, octadecanoic acid methyl ester, and iso-octadecanoic acid methyl ester. More preferably, the unsaturated fatty acid ester is selected from the group consisting of palmitoleic acid methyl ester, sapienic acid methyl ester, oleic acid methyl ester, elaidic acid methyl ester, and vaccenic acid methyl ester; di-unsaturated fatty acid methyl esters such as linoleic acid methyl ester; tri-unsaturated fatty acid methyl esters such as linolenic acid methyl ester, pinolenic acid methyl ester, and eleostearic acid methyl ester; tetra-unsaturated fatty acid methyl esters such as stearidonic acid methyl ester, and arachidonic acid methyl ester and pentaunsaturated fatty acid methyl esters such as bosseopentaenoic acid methyl ester.

Most preferably, the fatty acid ester is linoleic acid methyl ester.

In a particular attractive embodiment, the fatty acid esters are produced by the transesterification of fats and oils which results in the replacement of the glycerol component with a different alcohol. Hence, in accordance with the present invention the solvent preferably comprises a biodiesel.

Suitable fats and oils are vegetable oils or waste products derived from vegetable or animal fat. Suitable vegetable oils that may be used in the production of biodiesel include: rapeseed oil, soybean oil, palm oil, mustard oil, castor oil, coconut oil (copra oil), corn oil, cottonseed oil, false flax oil, hemp oil, peanut oil, radish oil, ramtil oil, rice bran oil, safflower oil, sunflower oil, tung oil, algae oil, copaiba oil, honge oil, jatropha oil, jojoba oil, milk bush oil, petroleum nut oil, walnut oil, sunflower oil, dammar oil, linseed oil, poppyseed oil, stillingia oil, vernonia oil, amur cork tree fruit oil, apple seed oil, balanos oil, bladderpod oil, bruceajavanica oil, burdock oil (bur oil), candlenut oil (kukui nut oil), carrot seed oil, chaulmoogra oil, crambe oil, cuphea oil, lemon oil, orange oil, mango oil, mowrah butter, neem oil, rosehip seed oil, sea buckthorn oil, shea butter, snowball seed oil (viburnum oil), tall oil, tamanu oil, and tonka bean oil (cumaru oil). Suitable waste products include used mixed cooking and/or frying oils and waste from animal destruction installations.

Suitable biodiesel to be used in accordance with the present invention include biodiesel derived from soy oil, rapeseed oil and used cooking oil. Suitably, the water phase can contain one or more salts to establish a so-called heavy medium.

Steps (a) and (b) are suitably be carried out in the same system, for instance a closed vessel or tank. The contact in step (b) is suitably established by mixing the recyclable non-styrene based plastic material and the emulsion. Suitably, the vessel or tank will therefore be provided with a mixing system to agitate the contents of the vessel or tank and to establish sufficient contact between the recyclable plastic material and the emulsion in step (b). By mixing the emulsion and the recyclable plastic material which is suitably be in the form of shredded parts, in step (b) a slurry which comprises plastic parts and emulsion will be obtained.

Step (b) will suitably be carried out for a predetermined length of time. Preferably, step (b) is carried out over a relatively short period of time. Preferably, step (b) is carried out for a period of time in the range of from 1-20 minutes, more preferably between 2-15 minutes, and most preferably between 2-10 minutes.

Step (b) can suitably be carried out at a variety of pressures. Step (b) is preferably carried out at atmospheric pressure.

If desired, step (b) can be carried out in a series of vessel or tanks which are interconnected with each other. In this way, step (b) can be carried out in a number of stages, ensuring that contaminants are sufficiently removed from the recyclable plastic material. It is also possible to carry out step (b) in a batch mode of operation in which separate tanks or vessels are operated one of each other.

In step (c), the recyclable plastic material as obtained in step (b) is separated from the emulsion as obtained in step (b), which emulsion contains contaminants removed from the contaminated recyclable plastic material. To establish this, the slurry which comprises recycled plastic material and emulsion as obtained in step (b) will suitably be passed to a separation system in which the cleaned plastic material in the form of particles will be separated from the emulsion that contains contaminants. A variety of separation systems can be used in step (c). Suitably, the separation system is a cyclone. Other suitable separation systems include sink-float tanks.

The separation in step (c) can suitably be carried out at a temperature in the range of from 10-35 °C, preferably at a temperature in the range of from 15-25 °C. Step (c), can suitably be carried out at a variety of pressures. Preferably, step (c) is carried out at atmospheric pressure.

The emulsion that contains contaminants as obtained in step (c) can subsequently be subjected to one or more purification steps to separate contaminants from the emulsion.

In step (d), the recyclable plastic material which is separated from the emulsion is recovered. The recovered recyclable plastic material can subsequently be used to make new plastic containers such as bottles.

In a particular embodiment, the present invention relates to a process to a process for cleaning recyclable plastic material comprising the following steps:

(a) providing a contaminated recyclable non-styrene based plastic material;
(b) contacting the contaminated recyclable plastic material at a temperature in the range of from 5-35 °C with an emulsion which comprises a water phase and a solvent phase to remove contaminants from the contaminated recyclable plastic material, wherein the water phase is present in an amount of more than 50 wt. %, based on total weigh of the emulsion, and the solvent phase comprises fatty acid ester;
(c) separating the recyclable plastic material as obtained in step (b) from the emulsion as obtained in step (b) which contains contaminants removed from the contaminated recyclable plastic material;
(d) grinding the recyclable plastic material as obtained in step (c) into plastic particles; and
(e) recovering the plastic particles as obtained in step (d).

The recyclable plastic material as separated from the emulsion in step (c) may be dried before it is subjected to the grinding step (d). In another embodiment, a drying step is carried out after step (d).

In addition, the present invention also relates to a process for cleaning recyclable plastic material comprising the following steps:

(a) providing a contaminated recyclable non-styrene based plastic material;
(b) dividing the contaminated recyclable plastic material in plastic parts;
(c) contacting the parts of the contaminated recyclable plastic material at a temperature in the range of from 5-35 °C with an emulsion which comprises a water phase and a solvent phase to remove contaminants from the parts of contaminated recyclable plastic material, wherein the water phase is present in an amount of more than 50 wt. %, based on total weigh of the emulsion, and the solvent phase comprises fatty acid ester;
(d) separating the parts of recyclable plastic material as obtained in step (c) from the emulsion as obtained in step (c) which contains contaminants removed from the parts of contaminated recyclable plastic material;
(e) grinding the parts of recyclable plastic material as obtained in step (c) into plastic particles; and
(f) recovering the plastic particles as obtained in step (e).

The parts of recyclable plastic material as separated from the emulsion in step (d) may be dried before it is subjected to the grinding step (e). In another embodiment, a drying step is carried out after step (e).

The process according to any one of claims, wherein the contaminants to be removed from the recyclable plastic material include oils such as motor oils, frying oils and cooking oils; dairy products such as milk; detergents and mixtures thereof.

The present invention also relates to the use of an emulsion which comprises a water phase and a solvent phase to remove contaminants from a contaminated recyclable plastic material, wherein the water phase is present in an amount of more than 50 wt. %, based on total weigh of the emulsion, and the solvent phase comprises an acetate.

**EXAMPLES**

Example 1

Polypropylene (PP) sheets (thickness 500 micron) were cut into 10 mm x 10 mm pieces. 7 grams PP pieces were placed in a 70 mL glass jar. 1 g of fresh frying oil (AH Frituurolie from Albert Heijn supermarket) was added and thoroughly mixed to make sure the entire plastic surface was covered with a layer of fat. In a separate jar, 37.5 g water and 12.5 g methyl nonanoate (supplied by Sigma Aldrich) were mixed. The combined liquids were added to the greasy plastics and shaken gently for 1 minute.
After shaking, the liquids were filtered off and the PP pieces were rinsed thoroughly with water. The wet PP flakes were dried in an oven for 24 hours at 130 °C. After drying, the mass of the flakes was determined. The mass before washing (PP and fat) and the total mass after cleaning were used to calculate the remaining amount of oil on the plastic surface and the cleaning efficiency. The equations below were used to calculate these quantities.

$$Remaining\ amount\ of\ oil = \frac{Mass\ remaining\ oil}{Mass\ PP} x100\%$$

$$= \frac{Mass\ after\ wash - Mass\ PP}{Mass\ PP} x100\%$$

$$Cleaning\ efficiency = \frac{Mass\ remaining\ oil}{Mass\ added\ oil} x100\%$$

$$= \frac{Mass\ after\ washing - Mass\ PP}{Mass\ added\ oil} x100\%$$

The remaining amount of oil after washing with this mixture was 0.5%. The cleaning efficiency i.e. the relative amount of oil that was removed in this washing step, was 96%.

Example 2

PP sheets (thickness 500 micron) were cut into 10 mm x 10 mm pieces. 7 grams PP pieces were placed in a 70 mL glass jar. 1 g of fresh frying oil (AH Frituurolie from Albert Heijn supermarket) was added and thoroughly mixed to make sure the entire plastic surface was covered with a layer of fat. In a separate jar, 37.5 g water and 12.5 g ethyl dodecanoate (supplied by Sigma Aldrich) were mixed. The combined liquids were added to the greasy plastics and shaken gently for 1 minute. After shaking, the liquids were filtered off and the PP pieces were rinsed thoroughly with water. The wet PP flakes were dried in an oven for 24 hours at 130 °C. After drying, the mass of the flakes was determined. The mass before washing (PP and fat) and the total mass after cleaning were used to calculate the remaining amount of oil on the plastic surface and the cleaning efficiency. The equations as indicated in Example 1 were used to calculate these quantities.
The remaining amount of oil after washing with this mixture was 1.0%. The cleaning efficiency i.e. the relative amount of oil that was removed in this washing step, was 93%.

Example 3

PP sheets (thickness 500 micron) were cut into 10 mm x 10 mm pieces. 7 grams PP pieces were placed in a 70 mL glass jar. 1 g of fresh frying oil (AH Frituurolie from Albert Heijn supermarket) was added and thoroughly mixed to make sure the entire plastic surface was covered with a layer of fat. In a separate jar, 3.5 g water and 12.5 g methyl linoleate (supplied by Sigma Aldrich) were mixed. The combined liquids were added to the greasy plastics and shaken gently for 1 minute. After shaking, the liquids were filtered off and the PP pieces were rinsed thoroughly with water. The wet PP flakes were dried in an oven for 24 hours at 130 °C. After drying, the mass of the flakes was determined. The mass before washing (PP and fat) and the total mass after cleaning were used to calculate the remaining amount of oil on the plastic surface and the cleaning efficiency. The equations as indicated in Example 1 were used to calculate these quantities.

The remaining amount of oil after washing with this mixture was 0.3%. The cleaning efficiency i.e. the relative amount of oil that was removed in this washing step, was 98%.

Example 4

PP sheets (thickness 500 micron) were cut into 10 mm x 10 mm pieces. 7 grams PP pieces were placed in a 70 mL glass jar. 1 g of fresh frying oil (AH Frituurolie from Albert Heijn supermarket) was added and thoroughly mixed to make sure the entire plastic surface was covered with a layer of fat. In a separate jar, 37.5 g water and 12.5 g Agripure AP-406 (methyl soyate, supplied by Cargill) were mixed. The combined liquids were added to the greasy plastics and shaken gently for 1 minute. After shaking, the liquids were filtered off and the PP pieces were rinsed thoroughly with water. The wet PP flakes were dried in an oven for 24 hours at 130 °C. After drying, the mass of the flakes was determined. The mass before washing (PP and fat) and the total mass after cleaning were used to calculate the remaining amount of oil on the plastic surface and the cleaning efficiency. The equations as indicated in Example 1 were used to calculate these quantities.

The remaining amount of oil after washing with this mixture was 0.6%. The cleaning efficiency i.e. the relative amount of oil that was removed in this washing step, was 96%.

Example 5

PP sheets (thickness 500 micron) were cut into 10 mm x 10 mm pieces. 7 grams PP pieces were placed in a 70 mL glass jar. 1 g of fresh frying oil (AH Frituurolie from Albert Heijn supermarket) was added and thoroughly mixed to make sure the entire plastic surface was covered with a layer of fat. In a separate jar, 45 g water and 5 g Agripure AP-406 (methyl soyate, supplied by Cargill) were mixed. The combined liquids were added to the greasy plastics and shaken gently for 1 minute. After shaking, the liquids were filtered off and the PP pieces were rinsed thoroughly with water. The wet PP flakes were dried in an oven for 24 hours at 130 °C. After drying, the mass of the flakes was determined. The mass before washing (PP and fat) and the total mass after cleaning were used to calculate the remaining amount of oil on the plastic surface and the cleaning efficiency according to the equations indicated in Example 1.

The remaining amount of oil after washing with this mixture was 2.4%. The cleaning efficiency i.e. the relative amount of oil that was removed in this washing step, was 83%.

Example 6

PP sheets (thickness 500 micron) were cut into 10 mm x 10 mm pieces. 7 grams PP pieces were placed in a 70 mL glass jar. 1 g of fresh frying oil (AH Frituurolie from Albert Heijn supermarket) was added and thoroughly mixed to make sure the entire plastic surface was covered with a layer of fat. In a separate jar, 45 g water and 5 g Agnique ME 18 RD-F (rape seed methyl ester, supplied by BASF) were mixed. The combined liquids were added to the greasy plastics and shaken gently for 1 minute. After shaking, the liquids were filtered off and the PP pieces were rinsed thoroughly with water. The wet PP flakes were dried in an oven for 24 hours at 130 °C. After drying, the mass of the flakes was determined. The mass before washing (PP and fat) and the total mass after cleaning were used to calculate the remaining amount of oil on the plastic surface and the cleaning efficiency according to the equations in Example 1.

The remaining amount of oil after washing with this mixture was 0.8%. The cleaning efficiency i.e. the relative amount of oil that was removed in this washing step, was 94%.

Example 7

PP sheets (thickness 500 micron) were cut into 10 mm x 10 mm pieces. 7 grams PP pieces were placed in a 70 mL glass jar. 1 g of fresh frying oil (AH Frituurolie from Albert Heijn supermarket) was added and thoroughly mixed to make sure the entire plastic surface was covered with a layer of fat. In a separate jar, 37.5 g water and 12,5 g Agnique ME 18 RD-F (rape seed methyl ester, supplied by BASF) were mixed. The combined liquids were added to the greasy plastics and shaken gently for 1 minute. After shaking, the liquids were filtered off and the PP pieces were rinsed thoroughly with water. The wet PP flakes were dried in an oven for 24 hours at 130 °C. After drying, the mass of the flakes was determined. The mass before washing (PP and fat) and the total mass after cleaning were used to calculate the remaining amount of oil on the plastic surface and the cleaning efficiency according to the equations in Example 1.

The remaining amount of oil after washing with this mixture was 2.2%. The cleaning efficiency i.e. the relative amount of oil that was removed in this washing step, was 85%.

Example 8

PP sheets (thickness 500 micron) were cut into 10 mm x 10 mm pieces. 10 grams PP pieces were placed in a 70 mL glass jar. High viscosity used frying oil was used for these tests, that contains at least 30% of saturated fat, which is solid at room temperature. Used frying oil was obtained from a fat waste collector in the Netherlands. 1 g of used frying oil was added and thoroughly mixed to make sure the entire plastic surface was covered with a layer of fat. In a separate jar, 37.5 g water and 12.5 g methyl nonanoate (supplied by Sigma Aldrich) were mixed. The combined liquids were added to the greasy plastics and shaken gently for 1 minute. After shaking, the liquids were filtered off and the PP pieces were rinsed thoroughly with water. The wet PP flakes were dried in an oven for 24 hours at 130 °C. After drying, the mass of the flakes was determined. The mass before washing (PP and fat) and the total mass after cleaning were used to calculate the remaining amount of oil on the plastic surface and the cleaning efficiency. The equations as indicated in Example 1 were used to calculate these quantities.

The remaining amount of oil after washing with this mixture was 0.0%. The cleaning efficiency i.e. the relative amount of oil that was removed in this washing step, was 100%.

Example 9

PP sheets (thickness 500 micron) were cut into 10 mm x 10 mm pieces. 10 grams PP pieces were placed in a 70 mL glass jar. 1 g of used frying oil was added and thoroughly mixed to make sure the entire plastic surface was covered with a layer of fat. In a separate jar, 37.5 g water and 12.5 g ethyl dodecanoate (supplied by Sigma Aldrich) were mixed. The combined liquids were added to the greasy plastics and shaken gently for 1 minute.
After shaking, the liquids were filtered off and the PP pieces were rinsed thoroughly with water. The wet PP flakes were dried in an oven for 24 hours at 130 °C. After drying, the mass of the flakes was determined. The mass before washing (PP and fat) and the total mass after cleaning were used to calculate the remaining amount of oil on the plastic surface and the cleaning efficiency. The equations as indicated in Example 1 were used to calculate these quantities.

The remaining amount of oil after washing with this mixture was 1.5%. The cleaning efficiency i.e. the relative amount of oil that was removed in this washing step, was 85%.

Example 10

PP sheets (thickness 500 micron) were cut into 10 mm x 10 mm pieces. 10 grams PP pieces were placed in a 70 mL glass jar. 1 g of used frying oil was added and thoroughly mixed to make sure the entire plastic surface was covered with a layer of fat. In a separate jar, 37.5 g water and 12.5 g methyl linoleate (supplied by Sigma Aldrich) were mixed. The combined liquids were added to the greasy plastics and shaken gently for 1 minute. After shaking, the liquids were filtered off and the PP pieces were rinsed thoroughly with water. The wet PP flakes were dried in an oven for 24 hours at 130 °C. After drying, the mass of the flakes was determined. The mass before washing (PP and fat) and the total mass after cleaning were used to calculate the remaining amount of oil on the plastic surface and the cleaning efficiency. The equations as indicated in Example 1 were used to calculate these quantities.

The remaining amount of oil after washing with this mixture was 2.2%. The cleaning efficiency i.e. the relative amount of oil that was removed in this washing step, was 79%.

Example 11

PP sheets (thickness 500 micron) were cut into 10 mm x 10 mm pieces. 10 grams PP pieces were placed in a 70 mL glass jar. 1 g of used frying oil was added and thoroughly mixed to make sure the entire plastic surface was covered with a layer of fat. In a separate jar, 37.5 g water and 12.5 g Agripure AP-406 (methyl soyate, supplied by Cargill) were mixed. The combined liquids were added to the greasy plastics and shaken gently for 1 minute.
After shaking, the liquids were filtered off and the PP pieces were rinsed thoroughly with water. The wet PP flakes were dried in an oven for 24 hours at 130 °C. After drying, the mass of the flakes was determined. The mass before washing (PP and fat) and the total mass after cleaning were used to calculate the remaining amount of oil on the plastic surface and the cleaning efficiency. The equations as indicated in Example 1 were used to calculate these quantities.

The remaining amount of oil after washing with this mixture was 2.1%. The cleaning efficiency i.e. the relative amount of oil that was removed in this washing step, was 78%.

Example 12

PP sheets (thickness 500 micron) were cut into 10 mm x 10 mm pieces. 10 grams PP pieces were placed in a 70 mL glass jar. 1 g of used frying oil was added and thoroughly mixed to make sure the entire plastic surface was covered with a layer of fat. In a separate jar, 45 g water and 5 g Agripure AP-406 (methyl soyate, supplied by Cargill) were mixed. The combined liquids were added to the greasy plastics and shaken gently for 1 minute.

After shaking, the liquids were filtered off and the PP pieces were rinsed thoroughly with water. The wet PP flakes were dried in an oven for 24 hours at 130 °C. After drying, the mass of the flakes was determined. The mass before washing (PP and fat) and the total mass after cleaning were used to calculate the remaining amount of oil on the plastic surface and the cleaning efficiency according to the equations in Example 1.

The remaining amount of oil after washing with this mixture was 3,1%. The cleaning efficiency i.e. the relative amount of oil that was removed in this washing step, was 70%.

Example 13

PP sheets (thickness 500 micron) were cut into 10 mm x 10 mm pieces. 10 grams PP pieces were placed in a 70 mL glass jar. 1 g of used frying oil was added and thoroughly mixed to make sure the entire plastic surface was covered with a layer of fat. In a separate jar, 37.5 g water and 12.5 g Agnique ME 18 RD-F (rape seed methyl ester, supplied by BASF) were mixed. The combined liquids were added to the greasy plastics and shaken gently for 1 minute. After shaking, the liquids were filtered off and the PP pieces were rinsed thoroughly with water. The wet PP flakes were dried in an oven for 24 hours at 130 °C. After drying, the mass of the flakes was determined. The mass before washing (PP and fat) and the total mass after cleaning were used to calculate the remaining amount of oil on the plastic surface and the cleaning efficiency according to the equations in Example 1.

The remaining amount of oil after washing with this mixture was 2.3%. The cleaning efficiency i.e. the relative amount of oil that was removed in this washing step, was 77%.

Example 14 (Comparative Example)

PP sheets (thickness 500 micron) were cut into 10 mm x 10 mm pieces. 7 grams PP pieces were placed in a 70 mL glass jar. 1 g of fresh frying oil (AH Frituurolie) was added and thoroughly mixed to make sure the entire plastic surface was covered with a layer of fat. In a separate jar, 50 g water was collected. The water was added to the greasy plastics and shaken gently for 1 minute. After shaking, the liquids were filtered off and the PP pieces were rinsed thoroughly with water. The wet PP flakes were dried in an oven for 24 hours at 130 °C. After drying, the mass of the flakes was determined. The mass before washing (PP and fat) and the total mass after cleaning were used to calculate the remaining amount of oil on the plastic surface and the cleaning efficiency. The equations as indicated in Example 1 were used to calculate these quantities.

The remaining amount of oil after washing with water was 6.0%. The cleaning efficiency i.e. the relative amount of oil that was removed in this washing step, was 57%.

Example 15 (Comparative Example)

PP sheets (thickness 500 micron) were cut into 10 mm x 10 mm pieces. 10 grams PP pieces were placed in a 70 mL glass jar. 1 g of used frying oil was added and thoroughly mixed to make sure the entire plastic surface was covered with a layer of fat. In a separate jar, 50 g water was collected. The water was added to the greasy plastics and shaken gently for 1 minute. After shaking, the liquids were filtered off and the PP pieces were rinsed thoroughly with water. The wet PP flakes were dried in an oven for 24 hours at 130 °C. After drying, the mass of the flakes was determined. The mass before washing (PP and fat) and the total mass after cleaning were used to calculate the remaining amount of oil on the plastic surface and the cleaning efficiency. The equations as indicated in Example 1 were used to calculate these quantities.

The remaining amount of oil after washing with water was 8.8%. The cleaning efficiency i.e. the relative amount of oil that was removed in this washing step, was 14%.

From the above Examples it will be clear that in accordance with the present invention a most attractive removal from oily contaminants is established from oil-contaminated plastic materials.

**Claims**

1. A process for cleaning recyclable plastic material comprising the following steps:

   (a) providing a contaminated recyclable non-styrene based plastic material;
   (b) contacting the contaminated recyclable plastic material at a temperature in the range of from 5-35 °C with an emulsion which comprises a water phase and a solvent phase to remove contaminants from the contaminated recyclable plastic material, wherein the water phase is present in an amount of more than 50 wt. %, based on total weight of the emulsion, and the solvent phase comprises a fatty acid ester;

(c) separating the recyclable plastic material as obtained in step (b) from the emulsion as obtained in step (b) which contains contaminants removed from the contaminated recyclable plastic material; and

(d) recovering after step (c) the recyclable plastic material which is separated from the emulsion.

2. The process according to claim 1, wherein the recyclable non-styrene plastic material as provided in step (a) is selected from the group consisting of a recyclable high density polyethylene material, low density polyethylene material, polyethylene terephthalate material, polypropylene material, polyvinylchloride material, polyamide material, polybutylene terephthalate material, polycarbonate material, polymethylmethacrylate material, and polyoxymethylene material,

3. The process according to claim 2, wherein the recyclable non-styrene based plastic material is a recyclable high density polyethylene material or polyethylene terephthalate material.

4. The process according to any one of claims 1-3, wherein the temperature in step (b) is in the range of from 15-30 °C.

5. The process according to claim 4, wherein the temperature in step (b) is in the range of from 15-25 °C.

6. The process according to any one of claims 1-5, wherein the solvent phase in step (b) is present in an amount in the range of from 1-20 wt. %, based on total weight of the emulsion.

7. The process according to claim 6, wherein the solvent phase in step (b) is present in an amount in the range of from 2-10 wt. %, based on total weight of the emulsion.

8. The process according to any one of claims 1-7, wherein the fatty acid ester in the solvent phase has the general formula (I) of $R^1\text{-(C=O)--}R^2$ wherein $R^1$ is an alkyl group comprising between 8-24 carbon atoms, and $R^2$ is an alkyl-alcohol group comprising between 1-4 carbon atoms..

9. The process according to any one of claims 1-8, wherein the fatty acid ester in the solvent phase has the general formula (I) of $R^1\text{-(C=O)-}R^2$ wherein $R^1$ is an alkyl group comprising between 12-20 carbon atoms, and $R^2$ is an alkyl alcohol group comprising between 1-2 carbon atoms.

10. The process according to claim 9, wherein the fatty acid ester is in the solvent phase is biodiesel.

11. The process according to any one of claims 1-10, wherein the contaminants to be removed from the recyclable non-styrene based plastic material include oils, dairy products, detergents and mixtures thereof.

12. Use of an emulsion which comprises a water phase and a solvent phase to remove contaminants from a contaminated recyclable non-styrene based plastic material, wherein the water phase is present in an amount of more than 50 wt. %, based on total weigh of the emulsion, and the solvent phase comprises a fatty acid ester.

Europäisches
Patentamt

European
Patent Office

Office européen
des brevets

**EUROPEAN SEARCH REPORT**

Application Number

EP 16 15 7866

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 3 156935 B2 (TONEN SEKIYUKAGAKU KK) 16 April 2001 (2001-04-16) * claim 1 * * paragraphs [0007] - [0008], [0014] - [0024] * * paragraph [0032] - paragraph [0041]; examples 1-9; table 1 * | 1-12 | INV. B29B17/00 |
| T | US 5 863 385 A (SIEBOTT FRANK [DE] ET AL) 26 January 1999 (1999-01-26) * claims 1-14 * * column 3, line 54 - column 4, line 8 * | | |
| A | US 5 780 520 A (REEVES BILLY J [US] ET AL) 14 July 1998 (1998-07-14) * paragraphs [0008] - [0011] * * claims 1-10 * | 1-12 | |
| A | CN 101 103 050 A (HONEYWELL FED MFG & TECH [US]) 9 January 2008 (2008-01-09) * claims 1-39 * | 1-12 | |

TECHNICAL FIELDS
SEARCHED (IPC)

B29B
B08B

The present search report has been drawn up for all claims

| Place of search | Date of completion of the search | Examiner |
|---|---|---|
| Munich | 8 August 2016 | Dossin, Maxime |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................

& : member of the same patent family, corresponding document

EPO FORM 1503 03.82 (P04C01)

# EP 3 210 733 A1

## ANNEX TO THE EUROPEAN SEARCH REPORT
## ON EUROPEAN PATENT APPLICATION NO.

EP 16 15 7866

This annex lists the patent family members relating to the patent documents cited in the above-mentioned European search report.
The members are as contained in the European Patent Office EDP file on
The European Patent Office is in no way liable for these particulars which are merely given for the purpose of information.

08-08-2016

| Patent document cited in search report | | Publication date | Patent family member(s) | | Publication date |
|---|---|---|---|---|---|
| JP 3156935 | B2 | 16-04-2001 | JP | 3156935 B2 | 16-04-2001 |
| | | | JP | H05115811 A | 14-05-1993 |
| US 5863385 | A | 26-01-1999 | AT | 183563 T | 15-09-1999 |
| | | | AU | 702067 B2 | 11-02-1999 |
| | | | AU | 5900996 A | 18-12-1996 |
| | | | CA | 2219068 A1 | 05-12-1996 |
| | | | CO | 4560397 A1 | 10-02-1998 |
| | | | CZ | 9703670 A3 | 18-02-1998 |
| | | | DE | 19519268 C1 | 23-01-1997 |
| | | | DK | 0828889 T3 | 06-03-2000 |
| | | | EP | 0828889 A1 | 18-03-1998 |
| | | | ES | 2137696 T3 | 16-12-1999 |
| | | | HU | 9802173 A2 | 28-12-1998 |
| | | | MA | 23885 A1 | 31-12-1996 |
| | | | NO | 975431 A | 26-11-1997 |
| | | | PE | 6197 A1 | 19-04-1997 |
| | | | PL | 323637 A1 | 14-04-1998 |
| | | | SK | 160597 A3 | 09-09-1998 |
| | | | TW | 438930 B | 07-06-2001 |
| | | | US | 5863385 A | 26-01-1999 |
| | | | WO | 9638628 A1 | 05-12-1996 |
| | | | ZA | 9603996 B | 27-11-1996 |
| US 5780520 | A | 14-07-1998 | AR | 000185 A1 | 21-05-1997 |
| | | | AU | 4766796 A | 27-08-1996 |
| | | | BR | 9607581 A | 07-07-1998 |
| | | | CA | 2212182 A1 | 15-08-1996 |
| | | | CO | 4560371 A1 | 10-02-1998 |
| | | | DE | 69608544 D1 | 29-06-2000 |
| | | | EP | 0808339 A1 | 26-11-1997 |
| | | | ES | 2145994 T3 | 16-07-2000 |
| | | | JP | H10513220 A | 15-12-1998 |
| | | | US | 5780520 A | 14-07-1998 |
| | | | WO | 9624630 A1 | 15-08-1996 |
| CN 101103050 | A | 09-01-2008 | BR | PI0609501 A2 | 13-04-2010 |
| | | | CA | 2598425 A1 | 12-10-2006 |
| | | | CN | 101103050 A | 09-01-2008 |
| | | | EP | 1877451 A1 | 16-01-2008 |
| | | | JP | 2008534265 A | 28-08-2008 |
| | | | US | 2006219276 A1 | 05-10-2006 |
| | | | US | 2006223980 A1 | 05-10-2006 |
| | | | US | 2006223981 A1 | 05-10-2006 |
| | | | US | 2006281895 A1 | 14-12-2006 |
| | | | US | 2006281896 A1 | 14-12-2006 |

EPO FORM P0459

For more details about this annex : see Official Journal of the European Patent Office, No. 12/82

page 1 of 2

12

**ANNEX TO THE EUROPEAN SEARCH REPORT
ON EUROPEAN PATENT APPLICATION NO.**

EP 16 15 7866

This annex lists the patent family members relating to the patent documents cited in the above-mentioned European search report.
The members are as contained in the European Patent Office EDP file on
The European Patent Office is in no way liable for these particulars which are merely given for the purpose of information.

08-08-2016

| Patent document cited in search report | Publication date | Patent family member(s) | Publication date |
|---|---|---|---|
| | | US 2006287213 A1 | 21-12-2006 |
| | | US 2007232784 A1 | 04-10-2007 |
| | | WO 2006107520 A1 | 12-10-2006 |

EPO FORM P0459

For more details about this annex : see Official Journal of the European Patent Office, No. 12/82

page 2 of 2